Europäisches Patentamt

European Patent Office

Office européen des brevets

(19)

(11) Publication number: **0 103 324**
**A2**

(12)
# EUROPEAN PATENT APPLICATION

(21) Application number: **83201191.0**

(22) Date of filing: **15.08.83**

(51) Int. Cl.³: **H 04 M 11/06, H 04 Q 11/04**

(30) Priority: **10.09.82 US 416441**

(43) Date of publication of application: **21.03.84**
**Bulletin 84/12**

(84) Designated Contracting States: **DE FR GB IT NL**

(71) Applicant: **MOTOROLA, INC., 1303 East Algonquin Road, Schaumburg Illinois 60196 (US)**

(72) Inventor: **Wurzburg, Henry, 12506 Wistful Cove, Round Road Texas 78664 (US)**

(74) Representative: **Ibbotson, Harold, Motorola Inc Patent and Licensing Operations - Europe Viables Industrial Estate, Basingstoke Hants RG22 4PD (GB)**

(54) Simultaneous voice and data transmission circuit having a digital loop transceiver.

(57) A digital PABX (10) having a plurality of digital line cards (22, 22') for coupling the PABX (10) to respective digital subscriber sets (44) via subscriber lines is provided. In each digital line card (22), a digital loop transceiver (36) operates in a master mode and in each digital subscriber set (44), a digital loop transceiver (36') operates in a slave mode. The digital loop transceivers (36, 36') may also provide simultaneous voice and data communication on a single channel, with a digital PCM voice word having a data bit embedded therein. Formatting and reformatting means are used to replace a predetermined PCM voice bit with a data bit to provide fast digital simultaneous communication on a single channel.

# SIMULTANEOUS VOICE AND DATA TRANSMISSION CIRCUIT HAVING A DIGITAL LOOP TRANSCEIVER

## Technical Field

This invention relates generally to telecommunications systems and, more particularly, to a voice and data circuit in a digital telephone system comprising a digital PABX and a plurality of digital subscriber sets.

## Background Art

When a voice call is made using a conventional analog subscriber set, only a small portion of the frequency spectrum available on the typical subscriber line is utilized. During the development of distributed data processing systems, an effort was made to utilize the existing subscriber line network to facilitate communication of the digital data used by such systems. Various types of modulator/demodulator (modem) devices have been developed to take advantage of the latent capability of the subscriber line network to support digital data communication at data rates significantly greater than that required for analog voice communication. For example, synchronous modems are commercially available which utilize the differential phase shift keyed (DPSK) modulation/demodulation technique to provide data communication at rates up to 9600 baud. However, even in the digital private automatic branch exchanges (PABXs) which support intra-exchange communication of voice information in the form of digital PCM voice data words, the response characteristics of the several analog components of the typical analog line card used therein generally prevent reliable communication at higher rates.

0103324

Several techniques have been proposed for providing higher speed digital data communication between subscribers through such PABXs. However, such proposals typically require the installation of additional pairs of subscriber lines to subscribers requiring the service and/or redesign/modification of the particular PABX to provide the capability to process the digital data words in a manner different from the digital PCM voice data words. Simultaneous voice and data communication at high digital speeds has been implemented with dual channels and four-wire systems. However, known single channel two-wire systems having simultaneous voice and data digital communication require additional switching structures and an existing PABX cannot be used without substantial modification.

## SUMMARY OF THE INVENTION

Accordingly, it is an object of the present invention to provide an improved communication system.

Another object of the invention is to provide a simultaneous voice and data circuit for communication using a conventional two-wire subscriber line.

Yet another object of the invention is to provide a simultaneous voice and data circuit utilizing a digital loop transceiver (DLT) and two-wire subscriber line.

In carrying out the above and other objects of the present invention, there is provided, in one form, a communication system in which digital data is transferred between a telephone set and a digital loop transceiver (DLT) circuit having a digital I/O port via a subscriber line. The DLT circuit comprises receiver means for receiving a first digital data word from the digital I/O port and which has a first signalling bit embedded therein. Modulation means serially modulate the first digital data word and the first signalling bit for transmission via the subscriber line. Sync detection means detect a modulated signal on the subscriber line and provide a valid sync signal in response to the detection. Demodulation means serially demodulate a second digital data word and a second signalling bit received via the subscriber line in response to the valid sync signal. Transmitter means transmit the second digital data word having the second signalling bit embedded therein to the digital I/O port. Thus, the DLT may selectively insert and extract a predetermined bit of a PCM voice signal and replace the predetermined bit for use as a second data path.

The above and other objects, features and advantages of the present invention will be more clearly understood from the following detailed description taken in conjunction with the accompanying drawings.

Brief Description of the Drawings

FIG. 1 is a block representation of a private automatic branch exchange (PABX).

FIG. 2 is a schematic diagram of an analog line card for use in the PABX of FIG. 1.

FIG. 3 is a digital line card for use in the PABX of FIG. 1.

FIG. 4 is a digital subscriber set to communicate over a subscriber line with the digital line card of FIG. 3.

FIG. 5 is a digital loop transceiver (DLT) constructed in accordance with the present invention for use in the digital line card of FIG. 3 and the digital subscriber set of FIG. 4.

FIG. 6 is a schematic representation of a four-wire communication system between the DLT in the digital line card of FIG. 3 and the DLT in the digital subscriber set of FIG. 4.

FIG. 7 is a timing diagram illustrating a typical exchange between the DLT in the digital line card of FIG. 3 and the PABX of FIG. 1.

FIG. 8 is a timing diagram illustrating a typical exchange between the DLT in the subscriber set of FIG. 4 and the codec/filter therein.

FIG. 9 is a schematic representation of a two-wire communication system between the DLT in the digital line card of FIG. 3 and the DLT in the digital subscriber set of FIG. 4.

FIG. 10 is a block representation of a simultaneous voice and data transmission circuit contstructed in accordance with the preferred embodiment of the present invention.

Description of the Preferred Embodiment

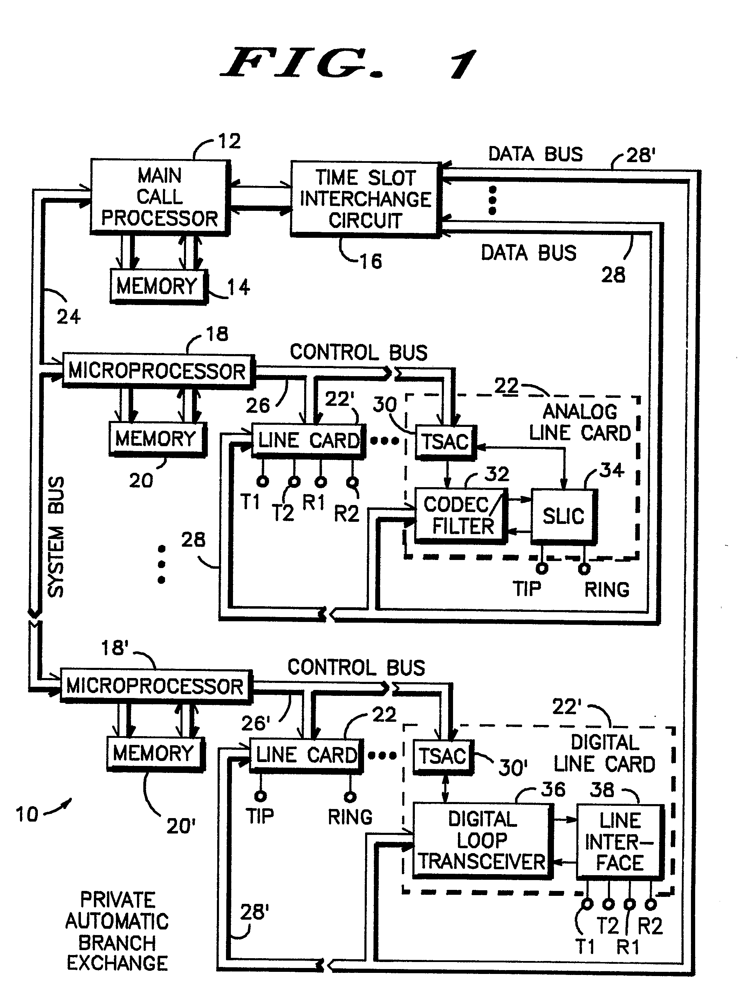

Shown in FIG. 1 is a conventional private automatic branch exchange (PABX) 10 comprised generally of a main call processor 12 having associated memory 14, a time slot interchange circuit 16, a set of call processing microprocessors 18-18', each having an associated memory 20-20', and a plurality of conventional analog line cards 22. In the illustrated form, the PABX 10 also includes at least two digital line cards 22' constructed in accordance with the present invention.

In a typical digital telephone switching system such as the PABX 10, the main call processor 12 coordinates, via a system bus 24, the call processing activities of each of the several call processing microprocessors 18-18'. In turn, each of the call processing microprocessors 18-18' controls, via respective control buses 26-26', the communication of digital PCM voice data words via respective data buses 28-28' between the several line cards 22 assigned to such microprocessor 18-18'.

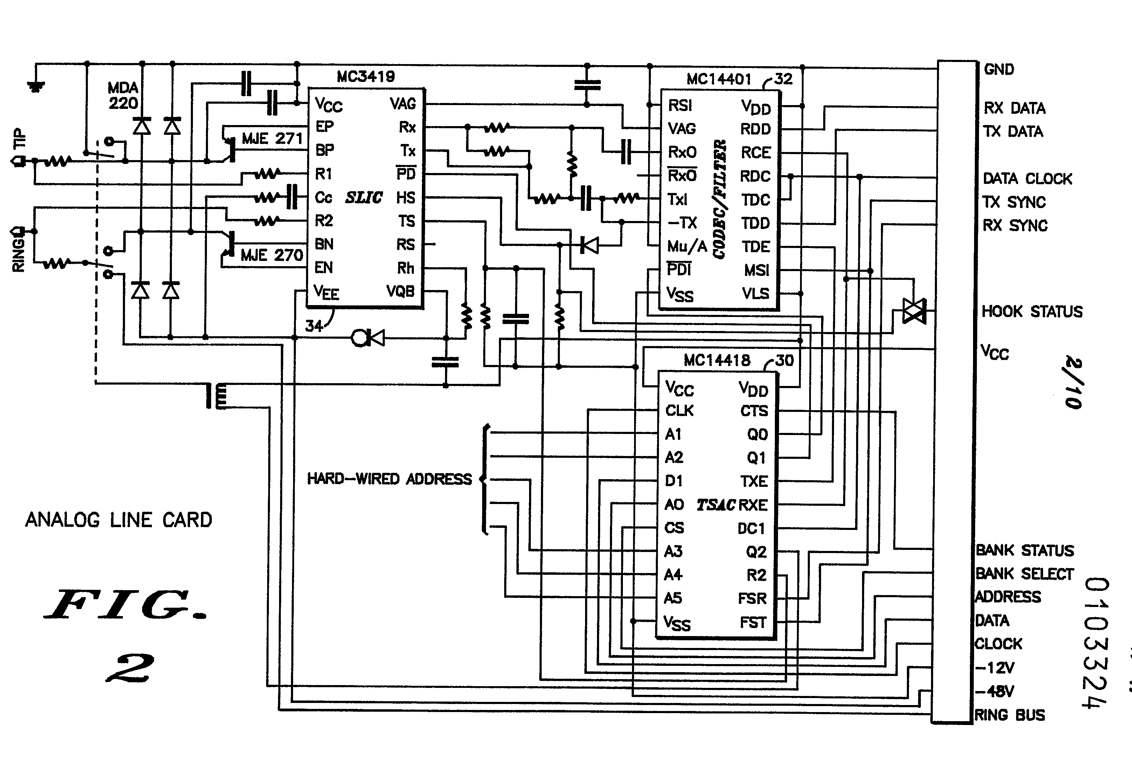

In general, each of the analog line cards 22 comprises a time slot assignment and control circuit (TSAC) 30 for selectively enabling a codec/filter 32 to digitally encode an analog voice input signal received via a subscriber line interface circuit (SLIC) 34 from a conventional single channel subscriber set (not shown) coupled to tip and ring conductors for output as a digital pulse code modulation (PCM) voice data word on the respective data bus 28-28', and to decode a digital PCM voice data word received on the data bus 28-28' for output as an analog voice output signal to the subscriber set (not shown) via the SLIC 34. Shown in FIG. 2 is a circuit schematic for such a conventional analog line card 22, using components commercially available from Motorola. The various control and data signals which are provided to or by the line card 22 are generally referred to as the "backplane" of the PABX 10.

In a typical telephone call initiated by a subscriber served by a "source" line card 22 controlled by, say, the call processing microprocessor 18 to a subscriber served by a "destination" line card 22 controlled by, for example, the call processing microprocessor 18', the TSAC 30 on the source line card 22 initially detects via the associated SLIC 34 that the source subscriber set is off hook, and routes the call routing information to the call processing microprocessor 18 for transfer to the main call processor 12. If the destination line card 22 is not indicated in the memory 14 as being busy, the main call processor 12 then requests the call processing microprocessor 18' to notify the destination line card 22 of the call. If, upon providing the system-generated ring signal to the destination subscriber set via the respective SLIC 34, the associated TSAC 30 advises the call processor 18' that the destination subscriber set has been taken off hook, the call processing microprocessor 18' advises the main call processor 12 that the requested connection has been established. During a particular transmit time slot assigned by the main call processor 12, the TSAC 30 on the source line card 22 enables the associated codec/filter 32 to encode the analog voice signal then being received from the source subscriber set via the SLIC 34 for output as a digital PCM voice data word onto the data bus 28. Meanwhile, the main call processor 12 has enabled the time slot interchange circuit 16 to couple the data bus 28 to the data bus 28' to facilitate the requested intra-exchange communication of the digital PCM voice data word. Simultaneously, the TSAC 30 on the destination line card 22 enables the associated codec/filter 32 to decode the digital PCM voice data word on the data bus 28' for output as an analog voice signal to the destination subscriber set via the SLIC 34. In a similar manner, but during a different receive time slot assigned by the main call processor 12, the destination line card 22 is allowed to encode the analog voice signal received from the destination subscriber set for transmission as a digital PCM voice data word via data bus 28', interchange circuit 16 and data bus 28' to the source line card 22 for decoding and output to the source subscriber set. If this exchange of digital PCM voice data words occurs at a sufficiently high frame rate, say of the order of 8kHz, then it will appear to each of the subscribers that there is a direct analog link between their respective subscriber sets.

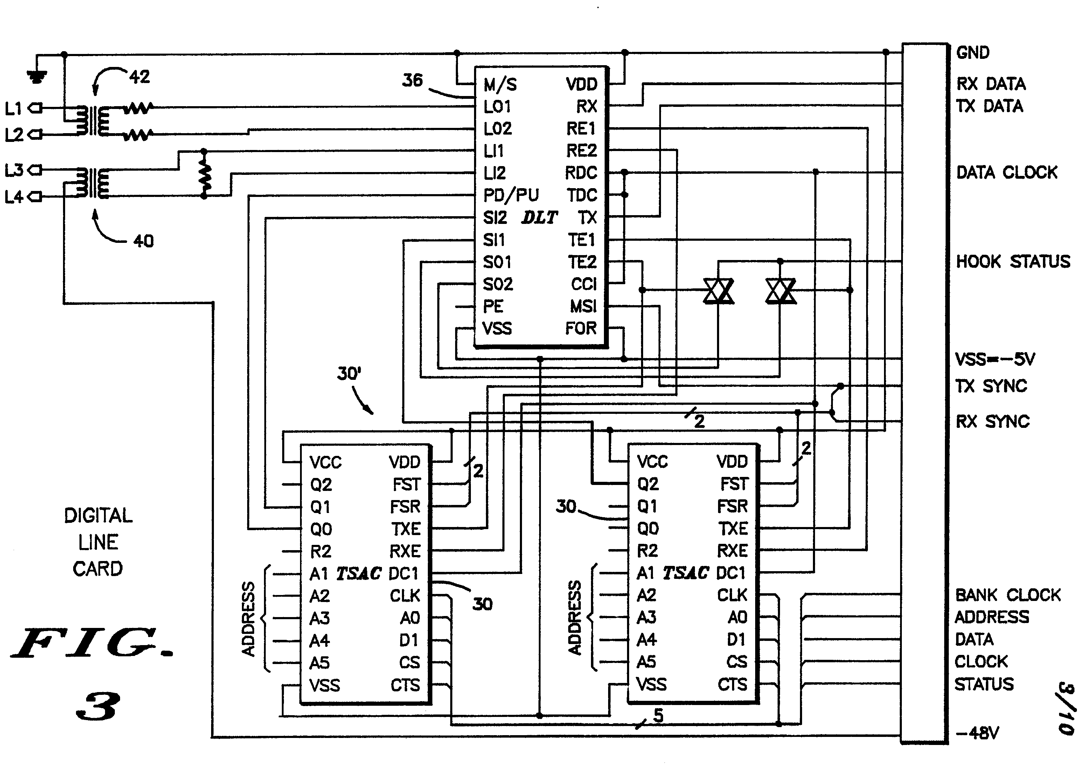

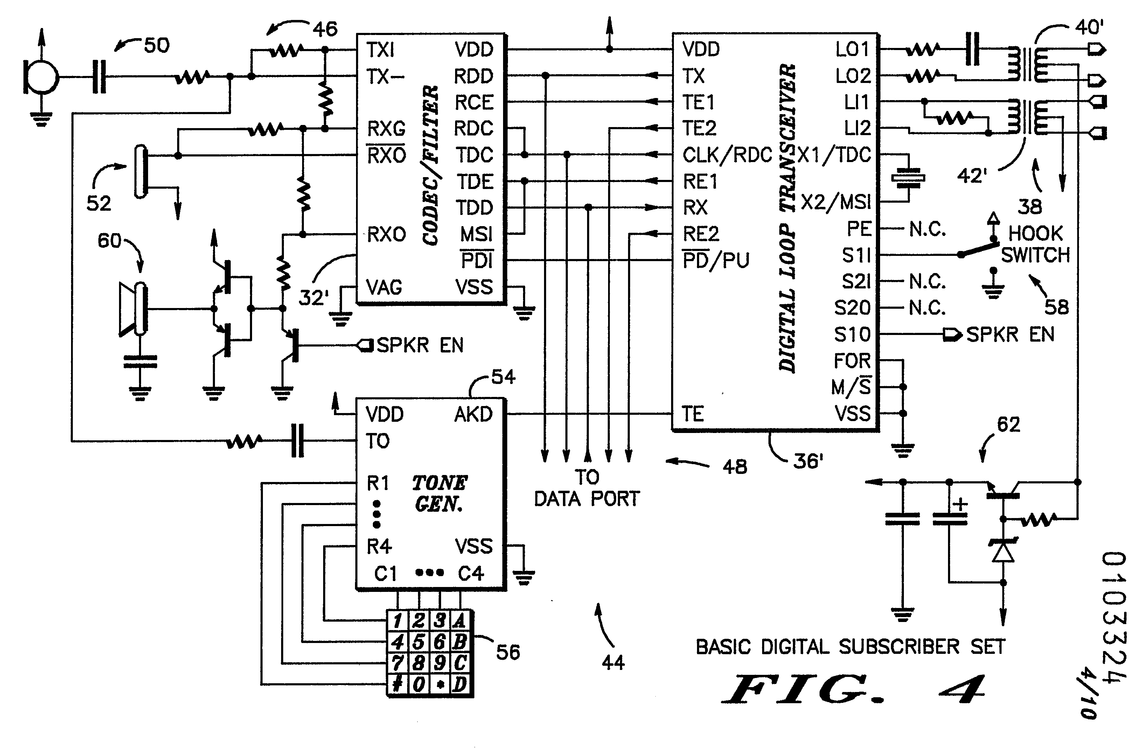

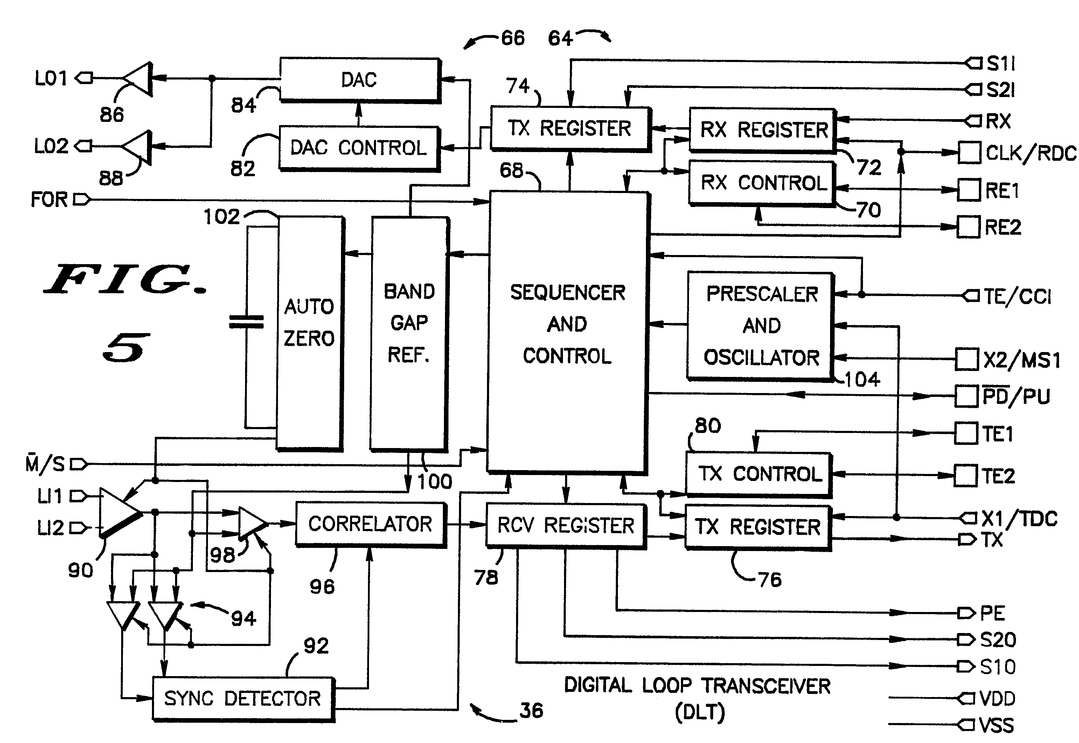

In the general form shown in FIG. 1, each of the digital line cards 22' comprises a time slot assignment and control circuit (TSAC) 30' for selectively enabling a digital loop tranceiver (DLT) 36 (see FIG. 5) to receive digital data words via a subscriber line interface network 38 from a dual channel, digital subscriber set, such as that shown in FIG. 4, which is coupled to respective receive and transmit pairs of tip and ring conductors, for direct output on the respective data bus 28-28' in the same manner as the digital PCM voice data words are output by the codec/filter 32 in the analog line cards 22; and to receive digital data words on the data bus 28-28' for direct output to the subscriber set via the subscriber line interface network 38. Shown in FIG. 3 is a circuit schematic for the digital line card 22', wherein: the TSAC 30' comprises a pair of the Motorola time slot assignment circuits (TSACs), one for each of the two digital communication channels the digital line card 22' is capable of simultaneously supporting; the DLT 36 comprises an integrated circuit constructed in accordance with FIG. 5; and the subscriber line interface network 38 comprises a transmit isolation transformer 40 coupled to the tip and ring conductors which comprise the receive pair of the subscriber line and a receive isolation transformer 42 coupled to the tip and ring conductors which comprise the transmit pair of the subscriber line. As illustrated in FIG. 3, the digital line card 22' responds to and provides the same control and data signals which are provided to or by the analog line card 22 via the backplane of the PABX 10.

Shown in FIG. 4 is a dual channel, digital subscriber set 44. In general, the subscriber set 44 comprises a digital loop transceiver (DLT) 36' (see FIG. 5) for receiving digital data words from the digital line card 22' (see FIG. 3) via a subscriber line interface network 38' coupled to respective receive and transmit pairs of tip and ring conductors, for output, if digital PCM voice data words, to a conventional codec/filter 32' for subsequent decoding and output as an analog voice output via a voice I/O network 46, or, if digital data words, to

0103324

a subscriber data processor (not shown) via a data port 48; and for transmitting digital data words provided either by the codec/filter 32' in the form of digital PCM voice data words or by the subscriber data processor in the form of digital data words, to the digital line card 22' via the subscriber line interface network 38'. In the preferred form, the voice I/O network 46 includes a voice input portion 50, and a voice output portion 52; the DLT 36' comprises an integrated circuit constructed in accordance with FIG. 5; and the subscriber line interface network 38' comprises a transmit isolation transformer 40' coupled to the tip and ring conductors which comprise the transmit pair of the subscriber line and a receive isolation transformer 42' coupled to the tip and ring conductors which comprise the receive pair of the subscriber line. In the illustrated form, a conventional tone generator 54, such as the Mostek MK5087, interacts with a dial keypad 56 and the voice I/O network 46 to provide the call routing information required to establish each of the two communication channels, while a conventional hook switch 58 provides call initiation signalling information to the DLT 36'. An audible indication of an incoming call is provided via a ringing transducer 60. A subscriber set power supply 62 derives operating power for the several components of the subscriber set 44 from the subscriber line in a conventional manner.

Shown in FIG. 5 is a block diagram of the digital loop transceiver (DLT) 36. In general, the DLT 36 comprises a digital interface portion 64 for interfacing with the PABX 10 in a master operating mode and with the codec/filter 32 and subscriber data processor in a slave operating mode, a modulator/demodulator portion 66 for transmitting and receiving digital data words via the subscriber line, and a sequencer and control portion 68

0103324

for controlling the sequence of operations performed by the digital interface and modulator/demodulator portions 64 and 66, respectively.

In the digital interface portion 64, a receive (RX) control circuit 70 responds to either of two channel receive enable signals, RE1 and RE2, by enabling a receive (RX) register 72 of the shift register type to serially receive digital data bits via a receive (RX) terminal in synchronization with a receive data clock (RDC) on a CLK/RDC terminal. When a predetermined "frame" of data (see discussion below) has been received, the sequencer and control portion 68 enables the RX register 72 to transfer the "transmit" frame of data in parallel into a transmitter (XMIT) register 74 in the modulator/ demodulator portion 66. Simultaneously, the then-current states of the two channel signalling bits on respective S1I and S2I terminals are latched and inserted into the frame of data in the XMIT register 74. Substantially independently, the sequencer and control portion 68 enables a transmit (TX) register 76 to receive a "receive" frame of data in parallel from a receiver (RCV) register 78 in the modulator/demodulator portion 66. Simultaneously, the two channel signalling bits in the receive frame of data are latched and outputted on respective S1O and S2O terminals. In response to either of two channel transmit enable signals, TE1 and TE2, a transmit (TX) control circuit 80 enables the TX register 76 to serially transmit the receive frame of data via a TX terminal in synchronization with a transmit data clock (TDC) on an X1/TDC terminal.

In the modulator/demodulator portion 66, a digital to analog converter (DAC) control circuit 82 periodically enables a digital to analog converter (DAC) 84 to transmit the transmit frame of data in the XMIT register 74 to the transmit transformer 40 in the subscriber line interface network 38 using a differential pair of output drivers 86 and 88 coupled to respective line output terminals LO1 and LO2. In a preferred form, the DAC 84 utilizes a burst differential phase shift keyed (DPSK) modulation technique at a carrier frequency of 256 kHz. Substantially independently, an input buffer 90 of the differential to single ended output type in the modulation/demodulation portion 66 couples the signal received from the receive transformer 42 in the subscriber line interface network 38 via line input terminals LI1 and LI2 to a sync detector 92 via a window detector 94 and to a correlator 96 via a comparator 98. As phase shifts of the proper form are decoded by the correlator 96, the "decoded" bits are shifted into a shift register portion thereof which maintains the most recently received set of data bits which might constitute a frame. When the energy of a DPSK signal of the proper frame length is detected, the sync detector 92 provides a valid sync signal to enable the correlator 96 to transfer the receive frame of data bits being maintained therein, in parallel to the RCV register 78. A switched capacitor bandgap reference 100 similar to that shown and described in copending U.S. Patent No. 4,375,595 provides a precision reference voltage to the DAC 84, the window detector 94, and the comparator 98. Periodically, the offsets of the input buffer 90, the window detector 94, the comparator 98, and the bandgap reference 100 are zeroed by an auto-zero circuit 102 in a manner similar to that shown and described in U.S. Patent No. 4,355,285.

In operation, the DLT 36 provides duplex communication of digital data words on a pair of independent channels and a signalling bit associated with each of the channels, between the duplex subscriber line and a digital data port. In a typical line transmission operation, the RX register 72 successively receives a digital data word for each of the channels in synchronization with the receive data clock, with the digital data word for the first of the channels being received from the digital I/O port via the RX terminal in response to the first of the channel receive enable signals, RE1, and the digital data word for the second of the channels being received from the digital I/O port via the RX terminal in response to the second of the channel receive enable signals, RE2. After the last data bit of the frame has been clocked into the RX register 72, both data words are transferred to the XMIT register 74, and the then-current states of the respective channel signalling bits on the S1I and S2I terminals added to complete the frame. As soon as the frame has been assembled, the DAC control circuit 82 actuates the DAC 84 to serially modulate the first and second digital data words and the respective channel signalling bits in the frame, for transmission via the transmit transformer 40 to one of the pairs of wires in the subscriber line.

In a typical line reception operation, the sync detector 92 monitors the signal received via the receive transformer 42 on the other pair of wires in the subscriber line, and provides a valid sync signal in response to detecting the energy of a DPSK modulated signal of the proper frame length. Meanwhile, the correlator 96 has been serially demodulating the sequentially received bits which might constitute a frame containing a digital data word for each of the channels and the respective channel signalling bits. In response to the valid sync signal, indicating that a valid frame has indeed been received, the correlator 96 transfers the frame to the RCVR register 78. At an appropriate time depending upon the mode of operation, the frame is then transferred from the RCVR register 78 to the TX register 76 and the respective channel signalling bits latched for

output on the S1O and S2O terminals. The TX register 76 then sequentially transmits the digital data words in synchronization with the transmit data clock, with the digital data word for the first channel being transmitted to the digital I/O port via the TX terminal in response to the first of the channel transmit enable signals, TE1, and the digital data word for the second channel being transmitted to the digital I/O port via the TX terminal in response to the second of the channel transmit enable signals, TE2.

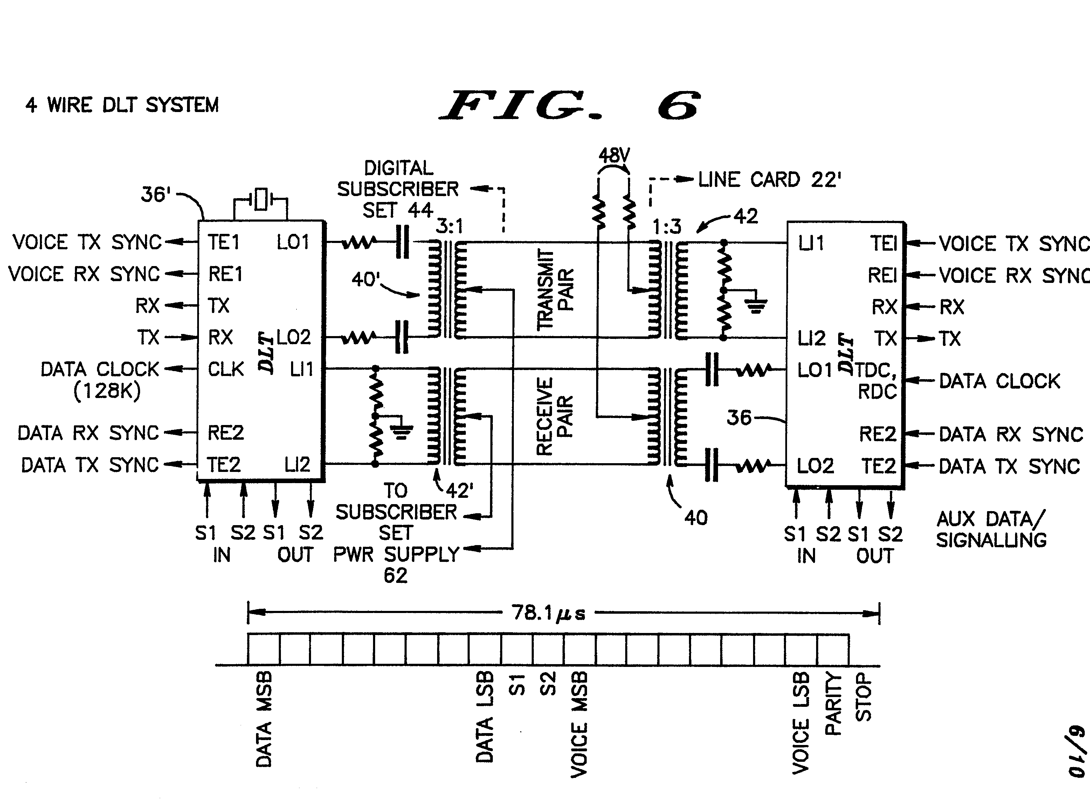

Shown in FIG. 6 is a schematic representation of a four-wire or duplex subscriber line which has been coupled at the exchange end thereof to the DLT 36 in the digital line card 22' via the transmit and receive transformers 40 and 42, respectively, and at the subscriber end thereof to the DLT 36' in the digital subscriber set 44 via the transmit and receive transformers 40' and 42', respectively. In the dual-channel form of the duplex system, a frame of data comprises an eight bit digital data word for the first channel, an eight bit digital data word for the second channel, and the signalling bits for the first and second channels. Preferably, the frame also includes a parity bit, either even or odd, as desired. A suitable frame format is illustrated in FIG. 6.

In the digital line card 22' shown in FIG. 3, the DLT 36 is placed in the master mode of operation by a logic high signal on a master/slave (M/S) terminal. In the master mode, the DLT 36 emulates the codec/filter 32 with respect to the backplane by receiving/transmitting the digital data words just like the codec/filter 32, and by responding to the various control signals just like the codec/filter 32. In particular, the RX register 72 successively receives a digital data word for each of the channels in synchronization with the data clock provided by the PABX 10 via the backplane, with the data word for the first channel being received from the backplane via the RX terminal in response to the RE1 signal provided by a respective one of the TSACs 30 during the receive time slot assigned to the first channel, and the data word for the second channel being received from the backplane via the RX terminal in response to the RE2 signal provided by the other TSAC 30 during the receive time slot assigned to the second channel. In response to the next master sync input (MSI) received via an X2/MSI terminal after the last data bit of the frame has been clocked into the RX register 72, both digital data words are transferred to the XMIT register 74, and the then-current states of the respective channel signalling bits provided via the S1I and S2I terminals by the TSACs 30, respectively, added to complete the frame. As soon as the frame has been assembled, the DAC control circuit 82 actuates the DAC 84 to serially modulate the first and second digital data words and the respective channel signalling bits in the frame, for transmission via the transmit transformer 40 to the receive pair of wires in the subscriber line.

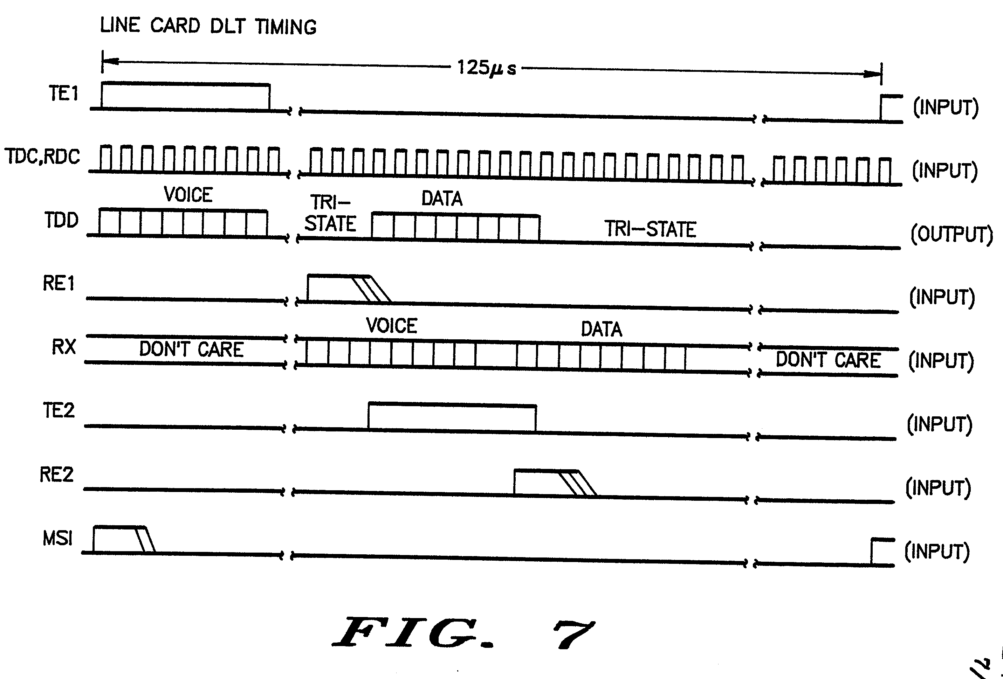

Simultaneously, the sync detector 92 monitors the signal received via the receive transformer 42 on the transmit pair of wires in the subscriber line, and provides the valid sync signal in response to detecting the energy of a DPSK modulated signal of the proper frame length. Meanwhile, the correlator 96 has been serially demodulating the sequentially received bits which might constitute a frame containing a digital data word for each of the channels and the respective channel signalling bits. In response to the valid sync signal, indicating that a valid frame has indeed been received, the correlator 96 transfers the frame to the RCVR register 78. In response to the next MSI, the frame is then transferred from the RCVR register 78 to the TX register 76 and the respective channel signalling bits latched for output on the S10 and S20 terminals. The TX register 76 then sequentially transmits the digital data words in synchronization with the transmit data clock provided by the PABX 10 via the backplane, with the digital data word for the first channel being transmitted to the backplane via the TX terminal in response to the TE1 signal provided by the first one of the TSACs 30 during the transmit time slot assigned to the first channel, and the digital data word for the second data channel being transmitted to the backplane via the TX terminal in response to the TE2 signal provided by the other TSAC 30 during the transmit time slot assigned to the second channel. A typical sequential interaction of the DLT 36 with the TSACs 30, and with the PABX 10 is illustrated by way of example in the timing diagram of FIG. 7.

In the subscriber set 44 shown in FIG. 4, the DLT 36' is placed in the slave mode of operation by a logic low on the master/slave (M/S) terminal. In the slave mode, the DLT 36' emulates the functions of the TSAC 30 and the backplane with respect to the codec/filter 32' by providing the digital PCM voice data words and control signals necessary for the codec/filter 32' to operate, and by receiving the digital PCM voice data words provided by the codec/filter 32' just like the backplane. In this mode, the sync detector 92 monitors the signal received via the receive transformer 42' on the receive pair of wires in the subscriber line, and provides the valid sync signal in response to detecting the energy of a DPSK modulated signal of the proper frame length. Meanwhile, the correlator 96 has been serially demodulating the sequentially received bits which might constitute a frame containing a digital data word for each of the channels and the respective channel signalling bits. In response to the valid sync signal, indicating that a valid frame has indeed been received, the correlator 96 transfers the frame to the RCVR register 78. The frame is then promptly transferred from the RCVR register 78 to the TX register 76 and the respective channel signalling bits latched for output on the S1O and S2O terminals. The TX register 76 then sequentially transmits the digital data words in synchronization with a transmit data clock generated by a prescaler and oscillator 104 using a crystal coupled between the X1/TDC and X2/MSI terminals, with the digital data word for the first channel being transmitted to the codec/filter 32' via the TX terminal in synchronization with a TE1 signal generated by the TX control 80 relative to the last valid sync signal, and the digital data word for the second data channel being transmitted to the data port 48 via the TX terminal in synchronization with a TE2 signal generated by the TX control 80 relative to the last valid sync signal.

In response to each of the valid sync signals provided by the sync detector 92, the RX register 72 successively receives a digital data word for each of the channels in synchronization with a receive data clock generated by the sequencer and control 68, with the digital PCM voice data word for the first channel being received from the codec/filter 32' via the RX terminal in synchronization with an RE1 signal generated by the RX control 70 relative to the last valid sync signal, and the digital data word for the second channel being received from the data port 48 via the RX terminal in response to an RE2 signal generated by the RX control 70 relative to the last valid sync signal. In response to the next valid sync signal provided by the sync detector 92, both digital data words are transferred to the XMIT register 74 and the then-current states of the respective channel signalling bits provided via the S1I and S2I terminals by the hook switch 58 and, if appropriate, the subscriber data processor, respectively, are added to complete the frame.

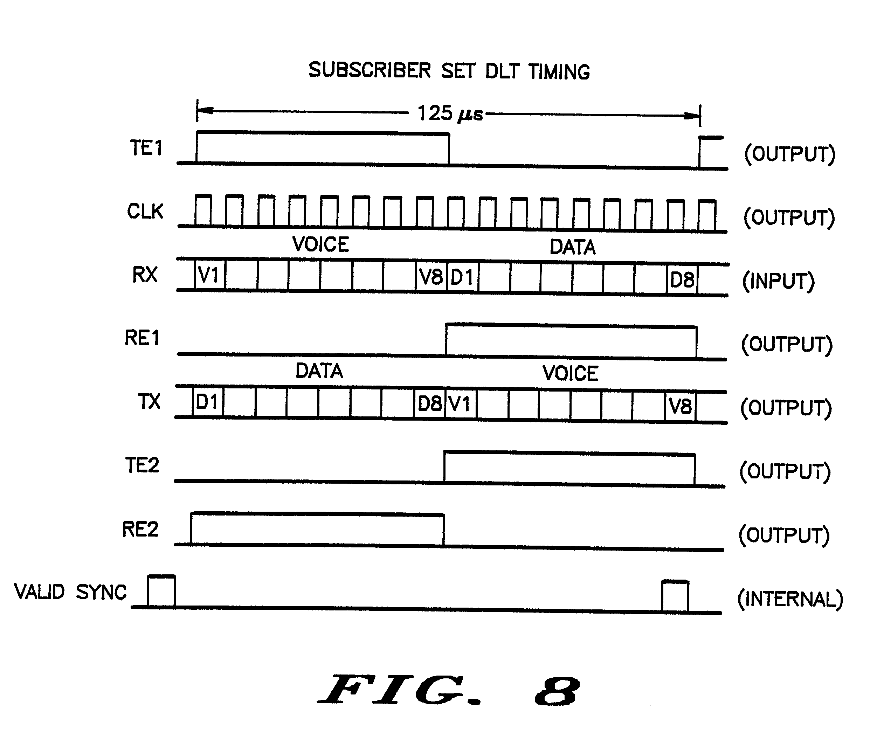

As soon as the frame has been assembled, the DAC control circuit 82 actuates the DAC 84 to serially modulate the first and second digital data words and the respective channel signalling bits in the frame, for transmission via the transmit transformer 40' to the transmit pair of wires in the subscriber line. A typical sequential interaction of the DLT 36' with the codec/filter 32' and the subscriber data processor is illustrated by way of example in the timing diagram of FIG. 8.

The prior detailed description has pertained to a communication system operating in a dual-channel mode having two pairs of wires in each subscriber line. A conventional PABX architecture has also been assumed to be used with the DLT disclosed.

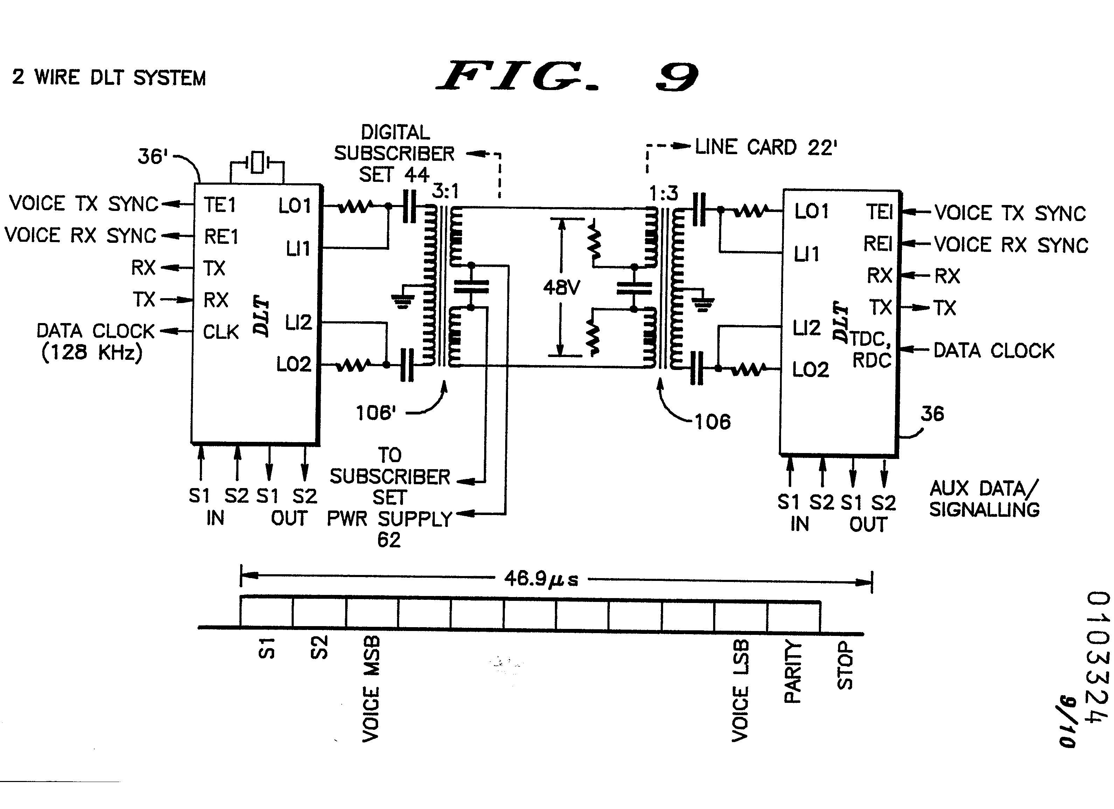

Although the DLT 36 is designed to operate primarily in the dual-channel mode over a duplex subscriber line, the DLT 36 may also be operated in an exchange which has only one pair of wires in each subscriber line by applying a logic high to a format (FOR) terminal thereof. In the illustrated form of such a two-wire system shown in FIG. 9, the half duplex subscriber line is coupled at the exchange end thereof to the DLT 36 in the digital line card 22' via a transmit/receive isolation transformer 106, and at the subscriber end thereof to the DLT 36' in the digital subscriber set 44 via a transmit/receive isolation transformer 106'. In the dual-channel form of the half duplex system, a frame of data comprises an eight bit digital data word for the first channel, the signalling bit for the first channel, and a second signalling bit for use by the subscriber data processor as a digital data bit. Preferably, the frame also includes a parity bit, either even or odd, as desired. A suitable frame format is illustrated in FIG. 9. Since only a single digital data bit may be transferred in each frame, the effective data bit transmission rate is only 8kHz rather than the 64kHz of the duplex system. However, this reduced data rate may be acceptable in situations where the cost to install the second pair of wires in the subscriber line outweighs the benefits of higher transmission rate.

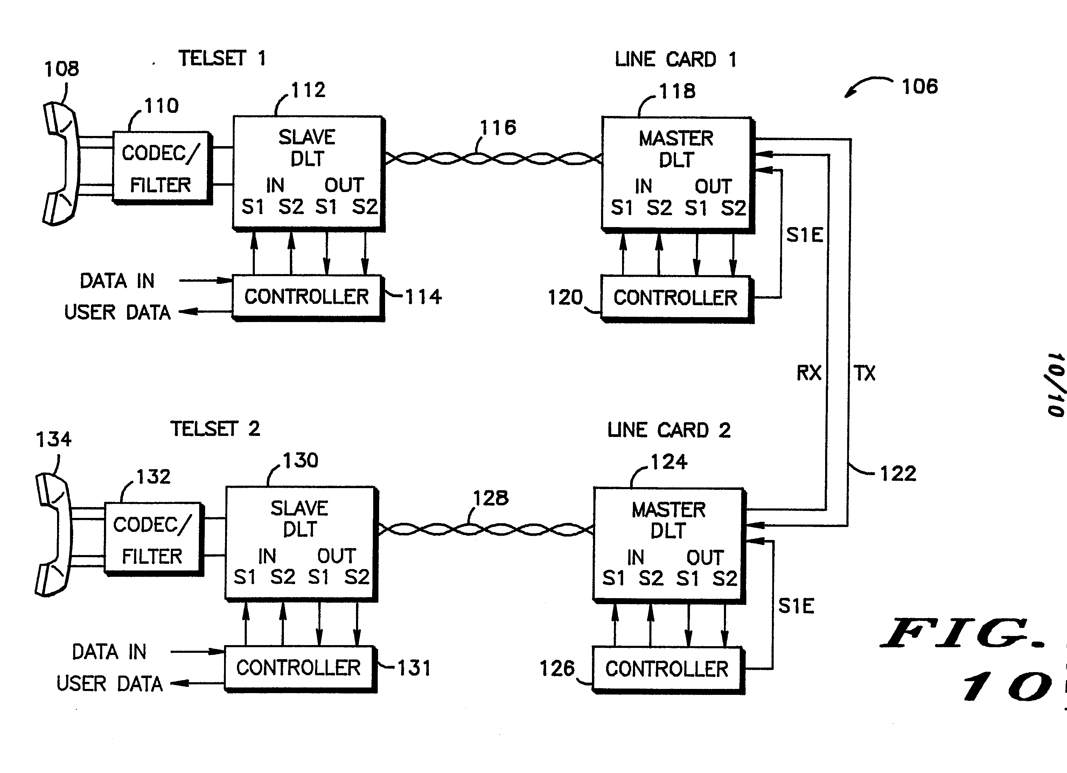

Shown in FIG. 10 is an extension of the two-wire system of FIG. 9 constructed in accordance with a preferred embodiment of the present invention. FIG. 10 illustrates a simultaneous voice and data transmission circuit 106 comprising first and second telephone set portions and first and second line card portions. The first telephone set comprises a telephone 108 coupled to a codec/filter circuit 110 which is coupled to a DLT 112. A controller 114 has signal bit input and output terminals coupled to DLT 112 and has a data input and output terminal. DLT 112 is coupled to the first line card portion via a two-wire subscriber line 116. The first line card portion comprises a DLT 118 which is coupled to subscriber line 116. A controller 120 has signal bit input and output terminals coupled to DLT 118. Controller 120 is also coupled to a signal bit enable terminal (SIE) of DLT 118. Transmit/receive data paths form a PCM communication bus 122 between DLT 118 and a DLT 124 of the second line card portion. A controller 126 has signal bit input and output terminals couled to DLT 124 and is also coupled to a signal bit enable terminal of (SIE) of DLT 124. A two-wire subscriber line 128 couples DLT 124 to a DLT 130 of the second telephone set portion. A controller 131 has signal bit input and output terminals coupled to DLT 130 and has a data input and output terminal. DLT 130 is coupled to a codec/filter circuit 132 which is coupled to a telephone 134.

In operation, voice and data transmission circuit 106 allows simultaneous voice and data to be routed in the PCM data time slot of a digital PABX. DLTs 118 and 124 function as masters over DLTs 112 and 130 which function as slaves. DLTs 118 and 124 insert and extract a predetermined bit of a PCM transmit/receive data word for use as an 8 Kbit/second user data channel between telephones 108 and 134 by use of internal formatting and reformatting means. In the preferred form, the predetermined bit is chosen as the least significant bit (LSB) of the transmit/receive data word although other bits may be chosen. Use of the LSB allows data to be routed between two conversing parties without having to modify the control or routing hardware or the software of the PABX. In this embodiment, the LSB of the PCM voice word is being replaced or 'stolen'. However, use of the LSB does not noticeably degrade the voice quality.

In conventional telephone operation, a PCM voice word and two signalling bits, say $S_1$ and $S_2$, are sent from the telephone set as a ten bit burst over the subscriber line 116. When the PCM voice word is received by DLT 118, the PCM word is routed to the appropriate line card and the appropriate signal bits outputted from DLT 118 for signalling. Control signal bits from the second line card and an associated PCM voice word are received by DLT 118 and transmitted to the first telephone set in a similar manner. DLT 112 applies the PCM voice word from DLT 118 to codec/filter circuit 110 and outputs the signal bits to controller 114.

Typically, only one signal bit, say $S_1$, is required to be transmitted between a telephone set and a line card for call placement and control. Use of only one signal bit frees the second signal bit $S_2$ for use as a duplex 8 Kbit/second user data path. The second signal bit may terminate or originate on the line card but a seperate data path and switching arrangement between line cards must be provided to establish a data connection between telephone sets. By forcing the signal bit insert enable (SIE) terminal to a logic high level on DLTs 118 and 124 which already have a PCM data path connection made by the PABX, an inbound $S_2$ signal bit from an origination telephone set is not only output as $S_2$ OUT on origination DLT, but is also inserted into the LSB of the PCM word of the origination DLT which is routed to the DLT of the destination line card. At the destination line card, the $S_2$ signal bit is stripped from the PCM word by the destination DLT and substituted for $S_2$ IN for transmission to the destination telephone set. At the destination telephone set, the $S_2$ OUT bit is outputted by the destination DLT as the $S_2$ OUT bit. Therefore, data on the originating telephone set's $S_2$ IN terminal appears at the destination telephone set's $S_2$ OUT terminal and vice versa. It should be noted that no additional data path or switching arrangement is required since the data has 'hitchhiked' on the established PCM voice path connection. In this manner, duplex voice conversations and 8-kbaud/second user data can be simultaneously routed between telephones without special switching provisions. The remaining signal bit is unaffected in this mode and may signal hook status to the line card plus ring commands to the telephone. It should be further noted that the invention may be practised by connecting the signal bit insert enable terminal of slave DLTs 112 and 130 to controllers 114 and 131, respectively, and performing the signal bit insertion and stripping at the slave DLTs instead of at the master DLTs.

While the invention has been described in the context of a preferred embodiment, it will be apparent to those skilled in the art that the present invention may be modified in numerous ways and may assume many embodiments other than that specifically set out and described above. Accordingly, it is intended by the appended claims to cover all modifications of the invention which fall within the true spirit and scope of the invention.

0103324

Claims

1. A digital loop transceiver circuit for providing communication between a subscriber line and a digital I/O port, the transceiver circuit comprising:

receiver means for receiving a first digital data word having a first signalling bit embedded therein from said digital I/O port;

modulation means for serially modulating said first digital data word and the first signalling bit for transmission via said subscriber line;

sync detection means for detecting a modulated signal on said subscriber line, and providing a valid sync signal in response to said detection;

demodulation means for serially demodulating, in response to said valid sync signal, a second digital data word and a second signalling bit received via said subscriber line; and

transmitter means for transmitting said second digital data word having the second signalling bit embedded therein to said digital I/O port.

2. The digital loop transceiver circuit of claim 1 further comprising:

formatting means for extracting the first signalling bit from said data word and substituting therefor a predetermined digital value.

3. The digital loop transceiver circuit of claim 2 further comprising:

reformatting means for substituting the second signalling bit for the least significant bit of the second digital data word.

4. The digital loop transceiver circuit of claim 1 wherein said sync detection means are characterized as being inoperative when the modulation means are modulating said first digital data word and the first signalling bit.

5. The digital loop transceiver circuit of claim 1 wherein the first embedded signalling bit is the least significant bit of the first digital data word, and the second embedded signalling bit is the least significant bit of the second digital data word.

6. The digital loop transceiver circuit of claim 1 wherein a third and a fourth signalling bit is associated with the first digital data word, said third signalling bit being received by the receiver means in synchronization with a frame clock and said fourth signalling bit being transmitted by the transmitter means in synchronization with a frame clock.

7. A digital loop transceiver circuit for providing communication between a subscriber line and a digital I/O port, the transceiver circuit comprising:

receiver means for receiving a first digital data word and a first signalling bit from said digital I/O port;

modulation means for serially modulating said first digital data word with the first signalling bit embedded therein for transmission via said subscriber line;

sync detection means for detecting a modulated signal on said subscriber line, and providing a valid sync signal in response to said detection;

demodulation means for serially demodulating, in response to said valid sync signal, a second digital data word having a second signalling bit embedded

0103324

therein and received via said subscriber line; and
transmitter means for transmitting said second digital
data word and the second signalling bit to said
digital I/O port.

8. The digital loop transceiver circuit of claim 7 further
comprising:
formatting means for extracting the first signalling
bit from said data word and substituting therefor
a predetermined digital value.

9. The digital loop transceiver circuit of claim 8 further
comprising:
reformatting means for substituting the second
signalling bit for the least significant bit of
the second digital data word.

10. The digital loop transceiver circuit of claim 7
wherein the sync detection means are characterized as
being inoperative when the modulation means are
modulating said first digital data word with the first
signalling bit.

FIG. 1

1/10

0103324

GND
RX DATA
TX DATA
DATA CLOCK
TX SYNC
RX SYNC
HOOK STATUS
Vcc
BANK STATUS
BANK SELECT
ADDRESS
DATA
CLOCK
−12V
−48V
RING BUS

MC14401 32

CODEC/FILTER

RSI · VDD
VAG · RDD
RxO · RCE
RxO · RDC
TxI · TDC
−TX · TDD
Mu/A · TDE
PDI · MSI
Vss · VLS

MC14418 30

TSAC

Vcc · VDD
CLK · CTS
A1 · Q0
A2 · Q1
D1 · TXE
A0 · RXE
CS · DC1
A3 · Q2
A4 · R2
A5 · FSR
Vss · FST

HARD−WIRED ADDRESS

MC3419

SLIC

Vcc · VAG
EP · Rx
BP · Tx
R1 · PD
Cc · HS
R2 · TS
BN · RS
EN · Rh
VEE · VQB

34

MJE 271
MJE 270
MDA 220

TIP
RING

ANALOG LINE CARD

*FIG. 2*

FIG. 3

BASIC DIGITAL SUBSCRIBER SET

*FIG. 4*

**FIG. 5**

DIGITAL LOOP TRANSCEIVER (DLT)

# 4 WIRE DLT SYSTEM

# *FIG. 6*

LINE CARD DLT TIMING

125μs

TE1 (INPUT)

TDC,RDC (INPUT)

TDD — VOICE / TRI-STATE / DATA / TRI-STATE (OUTPUT)

RE1 (INPUT)

RX — DON'T CARE / VOICE / DATA / DON'T CARE (INPUT)

TE2 (INPUT)

RE2 (INPUT)

MSI (INPUT)

*FIG. 7*

# SUBSCRIBER SET DLT TIMING

*FIG. 8*

# FIG. 9

2 WIRE DLT SYSTEM

FIG. 10

10/10

0103324